# EUROPEAN PATENT APPLICATION

(11) **EP 4 086 170 A1**
(43) Date of publication of application: **09.11.2022**
(21) Application number: 20910289.6
(22) Date of filing: 01.01.2020
(51) Int. Cl.: B64C 27/08, B64C 39/02, B64D 9/00

(54) **AIRCRAFT**

(71) Applicant: Aeronext Inc., Shibuya-ku Tokyo 1500021 (JP)
(72) Inventor: SUZUKI, Yoichi, Tokyo 150-0021 (JP)
(74) Representative: Herrero & Asociados, S.L.
(86) International application number: PCT/JP2020/000001
(87) International publication number: WO 2021/137271

(57) **Abstract**

[Problem to be Solved] To provide an aircraft that can efficiently improve speed performance and fuel efficiency. [Solution] The aircraft 1 according to the present disclosure is an aircraft capable of forward flight and hovering, and includes a lift generating part 2, a frame 4 for holding the lift generating part 2, and a loadable object 51 provided on the frame 4 and to be mounted. The front projection area of the frame 4 and the mounting part 5 during forward flight is smaller than the front projection area of the frame 4 and the mounting part 5 during hovering.

## Description

### [TECHNICAL FIELD]

The present disclosure relates to an aircraft.

### [BACKGROUND ART]

Drones or unmanned aerial vehicles (UAVs) Unmanned Aerial Unmanned Aerial Vehicles (UAVs) and other flying vehicles (hereinafter collectively referred to as "flying vehicles") have been gaining popularity in recent years. For example, a multicopter type with multiple rotor blades is one example (see, for example, Patent Literature 1).

### [PRIOR ART LIST]

### [Patent Literature 1]

Japanese Unexamined Patent Publication No. 2013-129301

### [SUMMARY OF INVENTION]

### [Technical Problem]

In the aircraft of Patent Literature 1, horizontal thrust is obtained by tilting the aircraft during flight in the forward direction. However, the inclination of the aircraft increases the resistance of the horizontal component in the direction of movement, causing a decrease in speed performance and fuel consumption.

Therefore, one objective of the present disclosure is to provide an aircraft that can efficiently improve speed performance and fuel consumption.

### [Technical Solution]

The aircraft according to the present disclosure is
an aircraft that is capable of forward flight and hovering, comprising:
a lift-generating part;
a frame that holds the lift-generating part; and
a loading part on the frame for storing a loadable object,
wherein the front projected area of the frame and the loading part in forward flight is smaller than the front projected area of the frame and the loading part in hovering flight.

### [ADVANTAGEOUS EFFECTS]

According to the present disclosure, an aircraft that can efficiently improve speed performance and fuel consumption can be provided.

### [BRIEF DESCRIPTION PF THE DRAWINGS]

FIG. 1 is a plan view of an aircraft in one embodiment.
FIG. 2 is a front view of the aircraft of the embodiment.
FIG. 3 is a side view of the aircraft of the embodiment.
FIG. 4 is a side view of a variant of the aircraft of the embodiment.
FIG. 5 is a side view of the hovering state of the aircraft of the embodiment.
FIG. 6 shows a projected area of the front surface of the aircraft in forward flight.
FIG. 7 shows the projected area of the front surface of the aircraft during hovering.
FIG. 8 is an exemplary functional block diagram of the aircraft.

### [DETAILED DESCRIPTION OF THE EMBODIMENTS]

The invention according to the present embodiment has the following configuration.

### [Item 1]

An aircraft capable of forward flight and hovering, comprising:
a lift generating part;
a frame supporting the lift generating part; and
a loading part provided on the frame, which could hold a loadable object,
wherein a front projected area of the frame and the loading part during forward flight is smaller than the front projected area of the frame and the loading part during hovering.

### [Item 2]

The aircraft according to item 1,
wherein the lift generating part includes rotor blades,
further comprising: a support part supporting the rotor blades at an end of the frame, wherein the support part fixing the rotor blades in an unmovable manner.

### [Item 3]

The aircraft according to item 2,
wherein the support part fixes the rotor blades so that the axis of rotation of the rotor blades is in the forward direction of the aircraft and inclined with respect to the frame.

### [Item 4]

The aircraft of any one of items 1 to 3,
wherein during hovering of the aircraft, the aircraft assumes a posteriorly inclined posture with respect to the horizontal direction.

### [Item 5]

The aircraft of any one of items 1 to 4,
wherein during the forward flight of the aircraft, the lift generating part generates lift forward and upward, and
wherein the aircraft assumes an attitude in which the frame is horizontal.

### [Item 6]

The aircraft of any one of items 1 to 5,
wherein the loading part has a connection part that is rotatable in at least a forward and backward direction with respect to the frame.

### [Item 7]

The aircraft according to item 6,
wherein the connection part has an attitude control mechanism that controls the attitude of the loading part.

### <Details of Embodiments>

The following is a description of an aircraft according to one form of the present disclosure, with reference to the drawings.

### <Details of one embodiment of this disclosure>

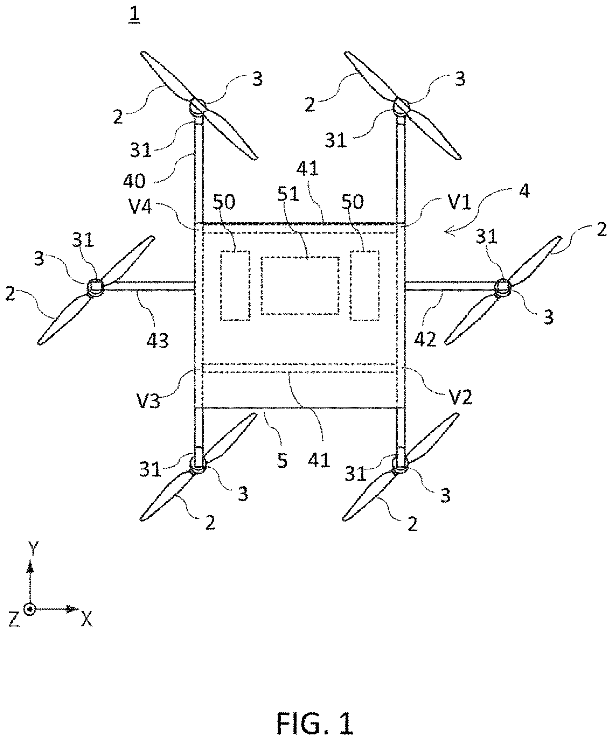

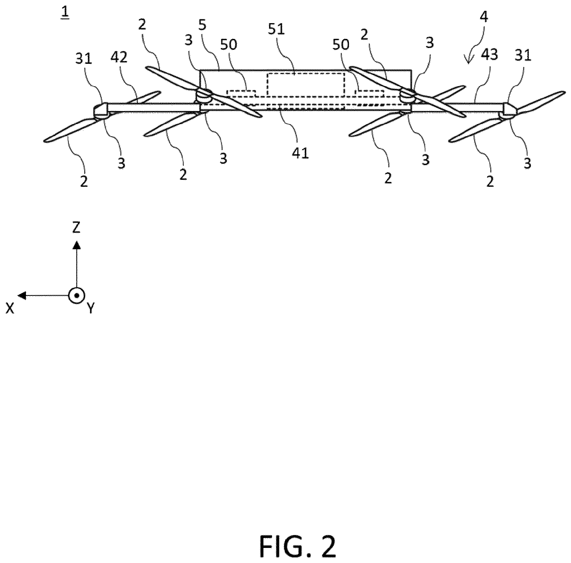

FIG. 1 is a plan view of an aircraft 1 according to one embodiment. FIG. 2 is a front view of the aircraft 1 according to the embodiment.

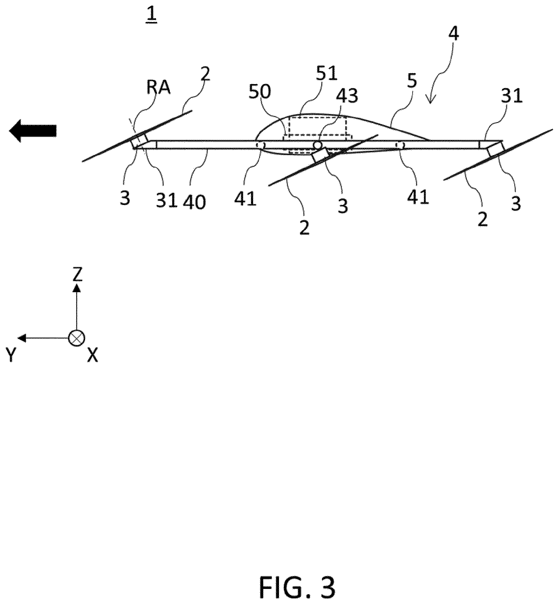

FIG. 3 is a side view of the airframe 1 according to the embodiment. As shown in FIGS. 1 - 3, the aircraft 1 is, for example, an aircraft that is capable of flying or hovering in a forward direction. The aircraft 1 has, for example, a rotary blade 2 (lift generating part), a motor 3 for rotating the rotary blade 2, and a frame 4 that holds the rotary blade 2 and to which the motor 4 to which the motor 3 is attached. In this embodiment, the front-back direction of the aircraft 1 is the Y-axis direction, the left-right (or horizontal) direction is the X-axis direction, and the up-down (or vertical) direction is the Z-axis direction. Here, the aircraft 1 uses the +Y direction as the forward direction.

The rotor blade 2 rotates under the output from the motor 3. The rotation of the rotor blade 2 generates propulsive force to the aircraft 1. The rotor blade 2 is an example of a lift generating part. For example, in a multicopter system, each of the multiple rotor blades can be controlled to rotate clockwise or counterclockwise or to stop, thereby enabling vertical and horizontal movement of the aircraft 1, as well as turning and yaw axis rotation.

The number of blades (rotors) of the present disclosure may be an arbitrary number (e.g., 1, 2, 3, 4, or more blades). Further, the shape of the blade may be any shape such as a flat shape, a curved shape, a twisted shape, a tapered shape, or a combination thereof. Further, the shape of the blade can be changed (for example, stretching, folding, bending, etc.). The blades may be symmetric or asymmetric (having different shaped upper and lower surfaces). Symmetrical means that the upper and lower surface profiles are symmetrical with respect to the blade string lines of the blades. Asymmetrical means not symmetrical as above. The blades can be formed to have a geometric shape suitable for generating dynamic aerodynamic forces (e.g., lift, thrust) when an air foil, a wing, or a blade moves in the air. The geometric shape of the blade can be appropriately selected to optimize the dynamic air characteristics of the blade, such as increasing lift and thrust and reducing drag. The rotor blade 2 may be a propulsion type (push type), a traction type (pull type), or a combination thereof.

The motor 3 causes the rotation of the propeller 2, and for example, the drive unit can include an electric motor, an engine, or the like. The blades can be driven by the motor and rotate around the axis of rotation of the motor (e.g., the major axis of the motor) in a clockwise and/or counterclockwise direction. Alternatively, the propeller (rotor blade 2) comprising the blade has a drive shaft in which an output is transmitted from the power shaft of the motor via a pulley or the like, and the blade may rotate around the drive shaft.

The rotation of each blade can be controlled independently. For example, in a multicopter type aircraft, some of the blades rotate in one direction and the other blades rotate in the other direction. The blades can all rotate at the same rotation speed, or can rotate at different rotation speeds. The rotation speed can be automatically or manually determined based on the dimensions (eg, size, weight) or control state (speed, moving direction, etc.) of the moving body.

The frame 4 is a member that supports the corresponding motor 3 and propeller 2, respectively. The frame 4 may be provided with a color-displaying body such as an LED to indicate the flight state, flight direction, and the like of the rotary wing aircraft. The frame 4 according to the present embodiment can be formed of a material appropriately selected from carbon, carbon fiber resin, glass fiber resin, stainless steel, aluminum, magnesium, or the like, or an alloy or combination thereof.

Frame 4, as shown in FIGS. 1 and 2, is comprised of a first frame 40 and a second frame 41. In the example shown in FIG. 1, the second frames 41, 41 are provided side-by-side between the first frames 40 and 40, which are provided side by side substantially in parallel. The first frame 40 and the second frame 41 are connected by known methods, such as, for example, joints and caulking.

As shown in FIG. 1, the first frames 40 and 40 are longitudinally oriented in the Y direction and are aligned at predetermined intervals along the X direction. Rotating blades 2 are attached to both ends of the first frames 40, 40 via a motor 3.

As shown in FIG. 1, the second frames 41, 41 are aligned at predetermined intervals along the y-direction with the x-direction as the longitudinal direction.

In this embodiment, the two first frames 40, 40 and the two second frames 41, 41 are defined as the connection points V1 to V4. The frame 4 includes a third frame 42 which extends in the X direction from the first frame 40 starting from between the vertices V1 and V2 on the first frame 40; and a fourth frame 43 which extends in the X direction from the first frame 40 as opposed to the third frame 42 starting from between the vertices V3 and V4 on the first frame 40. At the end of the third frame 42, the rotor blade 2 is attached via the motor 3. At the end of the fourth frame 43, the rotor blade 2 is attached via the motor 3.

As shown in FIG. 3, each end of the frame 4 is provided with a motor mount 31 that supports the rotor blade 2 and motor 3. Motor mount 31 is an example of a support part. The motor mount 31 is provided so that the rotation axis RA of the rotor blade 2 is tilted in front of the aircraft 1 and with respect to the frame 4. For example, the motor mount 3 may have a tapered shape that tapers from the end of the frame 4 toward the longitudinal direction of the frame 4. Further, the motor mount 31 according to the present embodiment is fixed at the end of the frame 4. That is, the motor mount 31 immobilizes the rotary blade 2 with respect to the frame 4. That is, the rotor blade 2 itself does not move rotationally with respect to the frame 4.

The mounting part 5 is, for example, a mechanism for mounting and holding a load (loadable object) 51. The battery 50 may be loaded on the mounting part 5. The mounting part 5 is provided on the frame 4 and stores the load 51. The batteries 50 are arranged side by side in the X direction with the luggage 51 in between. The number of batteries 50 to be loaded is not particularly limited. The mounting part 5 may have not only a square portion having V1 to V4 as a vertex but also a square portion protruding in the -Y direction from this square portion in a plan view.,

The mounting part 5 may be fixed to the frame 4 so as not to move rotationally. Further, the mounting part 5 may have a mechanism that can rotate with respect to the frame 4.

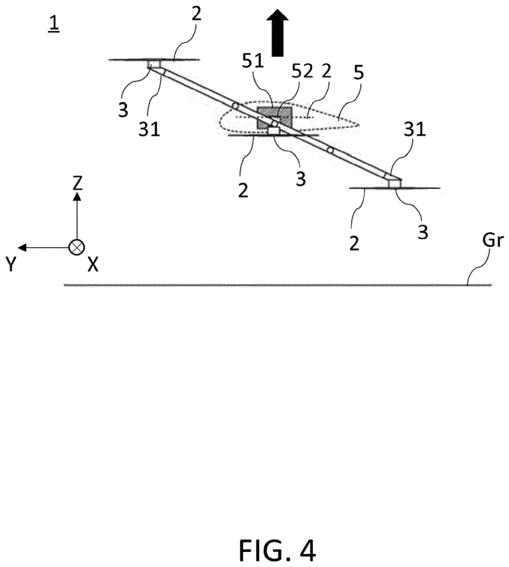

More specifically, as shown in FIG. 4, the mounting part 5 has a hinge (connecting part) 52 for connecting the housing of the mounting part 5 and the frame 4. With the hinge 52 as a fulcrum, the mounting part 5 is configured to be rotatable in the pitch direction with respect to the frame 4. The limit of the angle at which the mounting part 5 rotates with respect to the frame 4 via the hinge 52 is not particularly limited.

By providing such a hinge 52, for example, as shown in FIG. 4, even when the aircraft 1 is hovering from the ground Gr in a backward tilted posture, the orientation of the mounting part 5 can be kept horizontal so that the load 51 does not tilt. As a result, the load 51 can be held in a stable state even during flight and delivered to the destination. The hinge 52 according to the present embodiment rotates the mounting part 5 only in the front-rear direction (that is, the pitch direction), which is the same direction as the traveling direction. However, the mounting part 5 may be further rotated in the left-right direction (roll direction and / or yaw direction).

Here, the hinge 52 may have a mechanism such as a gimbal that actively controls the posture of the mounting part 5 by a motor or the like. This makes it possible to control the attitude of the mounting part 5 during flight. Then, the wobbling (natural vibration, etc.) of the mounting part 5 is further reduced, and the load 51 can be delivered more stably. The hinge 52 may be configured to be connected to the luggage 51 instead of the mounting part 5.

The shape and / or mechanism of the mounting part 5 is not particularly limited as long as the load 51 can be stored and held. Further, the mechanism for holding the position and inclination of the load 51 mounted on the mounting part 5 may be, for example, a tilt mechanism for tilting the load 51. Further, as described above, the mounting part 5 does not necessarily have to have a structure that can move rotationally with respect to the frame 4.

The aircraft 1 in the present embodiment does not have a landing gear in order to reduce the weight. Therefore, in the present embodiment, when the aircraft 1 lands, the mounting part 5 exerts the function of the landing gear. In another embodiment, landing gears may be appropriately provided on the frame 4, the mounting part 5, and the like.

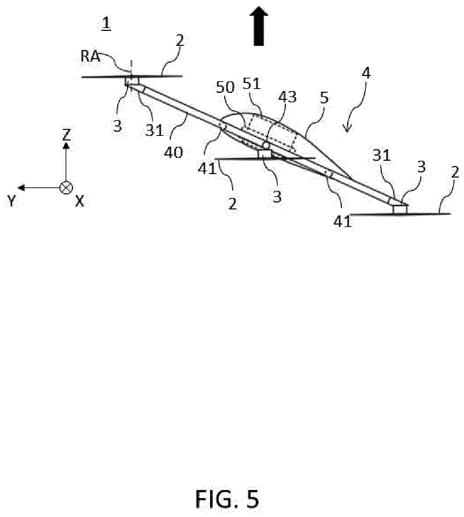

FIG. 5 is a side view showing a flight state of the aircraft 1 when hovering according to the present embodiment. Note that FIG. 3 is also a side view showing the flight state of the aircraft 1 during level flight according to the present embodiment. As shown in FIG. 5, when the aircraft 1 is hovering, the aircraft 1 takes a backward leaning posture so that the lift obtained by the rotor blade 2 is upward.

On the other hand, as shown in FIG. 3, during horizontal flight of the aircraft 1, the frame 4 becomes horizontal, and the rotation axis RA of the rotor blade 2 faces in the Y-axis direction and diagonally upward. At this time, the lift obtained from the rotor 2 is composed of a forward component and an upward component. Thereby, for example, the aircraft 1 can move in the horizontal direction while keeping the attitude of the mounting part 5 horizontal in the air.

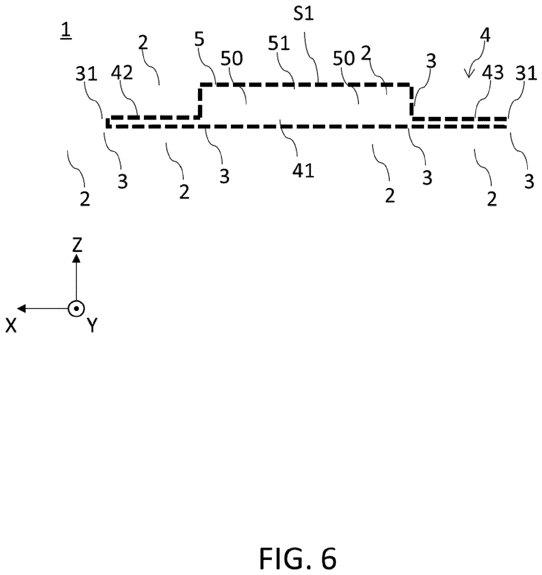

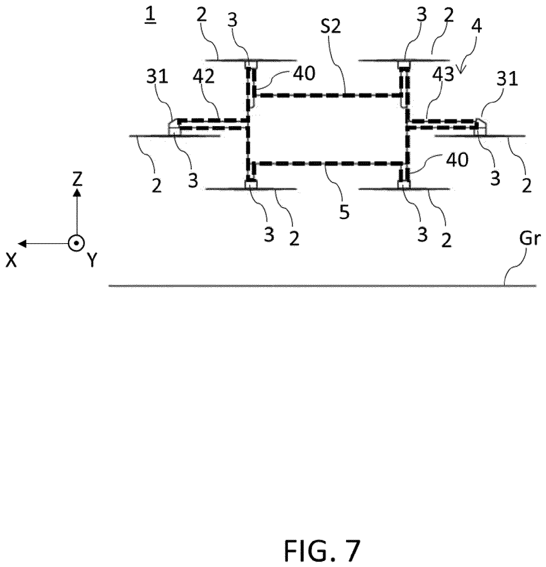

FIGS. 6 and 7 are diagrams for comparing the front projected area of the aircraft during forward flight and the front projected area of the aircraft during hovering. Here, the front projected area means the area of the projected area of the frame 4 and the mounting part 5 when the aircraft 1 is viewed from the front in the horizontal direction (that is, when viewed in the Y-axis direction). The front projected area is obtained by imaging the front surface of the aircraft 1 during horizontal flight and hovering from the horizontal direction, and calculating the area occupied by the frame 4 and the mounting part 5 in the captured image based on the actual size of the aircraft 1. The area surrounded by the thick broken line in FIG. 6 indicates the projected area S1 of the airframe during forward flight. The area surrounded by the thick broken line in FIG. 7 indicates the projection area S2 of the airframe during hovering. The frame 4 and the mounting part 5 occupy most of the components of the aircraft 1, and are a major factor in air resistance during flight.

As shown in FIGS. 6 and 7, in the aircraft 1 in the present embodiment, the projection area S1 during forward flight is narrower than the projection area S2 during hovering. That is, in the aircraft 1 in the present embodiment, the front projected area during forward flight is smaller than the front projected area during hovering.

In a conventional aircraft, when the rotor is fixed to the frame, the rotor faces upward when the frame becomes horizontal. Then, when flying forward, the aircraft leans forward in the pitch direction. When the aircraft tilts forward, the projection area from the front of the mounting part and frame of the aircraft becomes large. That is, in the conventional aircraft, the projected area becomes larger during forward flight than during hovering. In this case, the air resistance that the aircraft receives from the front tends to increase.

On the other hand, the aircraft 1 according to the present embodiment has a smaller projection area from the front when hovering. Then, the air resistance received from the front of the aircraft 1 is reduced. That is, the configuration of the aircraft 1 according to the present embodiment can efficiently improve the speed performance and fuel efficiency during forward flight.

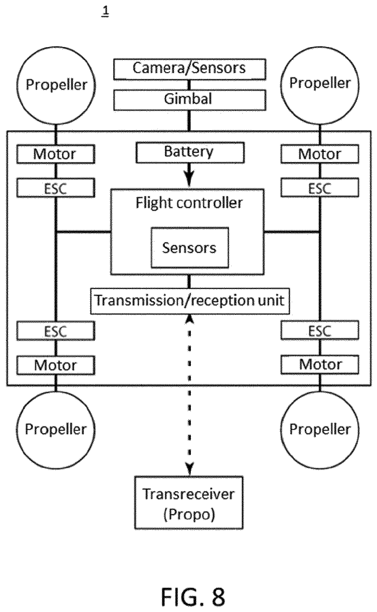

The above-described aircraft has a functional block, for example, as shown in FIG. 8. In addition, the functional block of FIG. 8 is a minimum reference structure, and the functional block of the aircraft 1 according to the present embodiment is not limited to such an example. A flight controller is a so-called processing unit. The processing unit may have one or more processors, such as a programmable processor (e.g., a central processing unit (CPU)). The processing unit has a memory (not shown) and it is possible to access the memory. The memory stores logic, codes, and / or program instructions that can be executed by the flight controller to perform one or more steps. The memory may include, for example, a separable medium such as an SD card or random access memory (RAM) or an external storage device. Data obtained from cameras and sensors may be transmitted directly to the memory and stored. For example, still image · dynamic image data taken by a camera or the like is recorded in a built-in memory or an external memory.

The processing unit includes a control module configured to control the state of the aircraft. For example, the control module may control a propulsion mechanism (motor and the like) in order to adjust the spatial arrangement, velocity, and/or acceleration of the aircraft having six degrees of freedom (translational motions x, y, and z, and rotational motions θx, θy, and θz). The control module can control one or more of the states of a mounted part and sensors.

The processing unit can communicate with a transmission/reception unit configured to send and/or receive data from one or more external devices (e.g., a terminal, display device, or other remote controller). The transmission/reception unit can use any suitable communication means such as wired or wireless communication. For example, the transmission/reception unit can use one or more of a local area network (LAN), a wide area network (WAN), infrared, wireless, WiFi, point-to-point (P2P) network, telecommunication network, cloud communication, and the like. The transmission/reception unit can transmit and/or receive one or more of, data acquired by sensors, process results generated by the processing unit, predetermined control data, user command from a terminal or a remote controller, and the like.

Sensors according to the present embodiment may include inertial sensors (acceleration sensors, gyro sensors), GPS sensors, proximity sensors (e.g., LiDAR), or vision/image sensors (e.g., cameras).

The aircraft of the present disclosure can be expected to be used as an aircraft for delivery services, and to be used as an industrial aircraft in a warehouse or a factory. In addition, the aircraft of the present disclosure can be used in airplane-related industries such as multicopters and drones. Further, the present disclosure can be suitably used as an aerial vehicle equipped with a camera or the like. In addition, this technology can be used in various industries such as security field, agriculture, and infrastructure monitoring.

The above-described embodiments are merely examples for facilitating the understanding of the present technique and are not intended to limit the interpretation of the present technique. It goes without saying that the present technology can be changed and improved without deviating from the purpose, and the present technology includes the equivalent thereof.

### [Description of Reference Numerals]

1: aircraft
2: rotor blade (lift generating part)
3: motor
4: frame
5: mounting part
31: motor mount (support part)
51: load (loadable object)
52: hinge (connecting part)
S1: projected area on the front of the aircraft during forward flight
S2: projected area on the front of the aircraft when hovering

## Claims

1. An aircraft capable of forward flight and hovering, comprising:
a lift generating part;
a frame supporting the lift generating part; and
a loading part provided on the frame, which could hold a loadable object,
wherein a front projected area of the frame and the loading part during forward flight is smaller than the front projected area of the frame and the loading part during hovering.

2. The aircraft according to Claim 1,
wherein the lift generating part includes rotor blades, further comprising: a support part supporting the rotor blades at an end of the frame,
wherein the support part fixing the rotor blades in an unmovable manner.

3. The aircraft according to Claim 2,
wherein the support part fixes the rotor blades so that the axis of rotation of the rotor blades is in the forward direction of the aircraft and inclined with respect to the frame.

4. The aircraft of any one of Claims 1 to 3,
wherein during hovering of the aircraft, the aircraft assumes a posteriorly inclined posture with respect to the horizontal direction.

5. The aircraft of any one of Claims 1 to 4,
wherein during the forward flight of the aircraft, the lift generating part generates lift forward and upward, and
wherein the aircraft assumes an attitude in which the frame is horizontal.

6. The aircraft of any one of Claims 1 to 5,
wherein the loading part has a connection part that is rotatable in at least a forward and backward direction with respect to the frame.

7. The aircraft according to Claim 6,
wherein the connection part has an attitude control mechanism that controls the attitude of the loading part.
